(19) Europäisches Patentamt
European Patent Office
Office européen des brevets

(11) **EP 3 987 886 B1**

(12) **EUROPÄISCHE PATENTSCHRIFT**

(45) Veröffentlichungstag und Bekanntmachung des Hinweises auf die Patenterteilung:
**24.09.2025 Patentblatt 2025/39**

(21) Anmeldenummer: **20733422.8**

(22) Anmeldetag: **17.06.2020**

(51) Internationale Patentklassifikation (IPC):
*B32B 27/08* (2006.01)      *B32B 27/12* (2006.01)
*B32B 27/32* (2006.01)      *B64C 1/40* (2006.01)
*B64D 15/12* (2006.01)      *H05B 3/28* (2006.01)
*H05B 3/26* (2006.01)      *H05B 3/36* (2006.01)
*B64D 13/08* (2006.01)      *B32B 3/26* (2006.01)

(52) Gemeinsame Patentklassifikation (CPC):
**H05B 3/28; B32B 3/266; B32B 27/08; B32B 27/12; B32B 27/322; H05B 3/36;** B32B 2260/021; B32B 2260/046; B32B 2307/30; B32B 2307/732; B32B 2605/18; B64C 1/40; B64D 13/08; B64D 15/12; H05B 2203/02

(86) Internationale Anmeldenummer:
**PCT/EP2020/066744**

(87) Internationale Veröffentlichungsnummer:
**WO 2020/254393 (24.12.2020 Gazette 2020/52)**

(54) **TEMPERIERVORRICHTUNG FÜR EIN LUFTFAHRZEUG UND VERFAHREN ZUM HERSTELLEN EINER TEMPERIERVORRICHTUNG**

TEMPERING DEVICE FOR AN AIRCRAFT AND METHOD FOR MANUFACTURING A TEMEPRING DEVICE

DISPOSITIF DE THERMORÉGULATION POUR UN AÉRONEF ET PROCÉDÉ DE FABRICATION D'UN DISPOSITIF DE THERMORÉGULATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.06.2019 DE 102019116796**

(43) Veröffentlichungstag der Anmeldung:
**27.04.2022 Patentblatt 2022/17**

(73) Patentinhaber: **VINCORION Advanced Systems GmbH**
**22880 Wedel (DE)**

(72) Erfinder: **THRON, Kai**
**25421 Pinneberg (DE)**

(74) Vertreter: **Aurigium Leischner & Luthe Patentanwälte Partnerschaft mbB**
**Robert-Koch-Straße 2**
**82152 Planegg (DE)**

(56) Entgegenhaltungen:
EP-A1- 2 291 054      EP-A1- 2 685 784
DE-A1- 102015 007 885      DE-A1- 102016 107 908

**Beschreibung**

Der vorliegende Ansatz geht von einer Temperiervorrichtung und einem Verfahren zum Herstellen einer Temperiervorrichtung für ein Luftfahrzeug nach Gattung der unabhängigen Ansprüche aus.

Werden Heizelemente in einen Verbundwerkstoff integriert, so besteht der Verbund häufig aus einem Trägermaterial, wie beispielsweise einer FR4 Platte oder einer Kunststofffolie aus beispielsweise PE, auf die ein Kaltleitermaterial, ein sogenanntes PTC-Material, aufgetragen ist. Das Auftragen geschieht in der Regel per Siebdruck-verfahren. Wahlweise kann dann noch eine Kunststofffolie auf das PTC-Material geklebt oder ein Schutzlack zum Schutz vor Umwelteinflüssen aufgebracht werden. Durch Wechselwirkungen der umliegenden Schichten mit dem PTC-Material kann es zu ungewünschten Veränderungen des elektrischen Widerstands des PTC-Materials kommen.

Die DE 10 2016 107 908 A1 offenbart eine Heizvorrichtung für einen Flugzeuginnenraum. Die Heizvorrichtung weist eine mechanisch belastbare Tragstruktur, eine mechanisch belastbare und wärmeleitende Deckstruktur, und einen Heizer auf, der zwischen der Tragstruktur und der Deckstruktur angeordnet ist und eine Heizschicht aus einem Widerstandsmaterial mit einem positiven Temperaturkoeffizienten aufweist. Das Widerstandsmaterial kann auf einer flexiblen Folie aufgebracht sein, die mit der Tragstruktur verklebt ist. Der Heizer kann zwischen der Deckstruktur und der Tragstruktur schwimmend angeordnet sein.

Die EP 2 291 054 A1 offenbart einen selbstregulierenden Heizer. Der Heizer umfasst eine Mehrzahl von zueinander beabstandet angeordneten PTC-Elementen, die in eine elastisches Vergussmaterial eingebettet sind.

Die EP 2 685 784 A1 offenbart eine Heizvorrichtung bei der zwischen einer PTC-Schicht und einer Kontaktelektrode der PTC-Schicht eine Gleitschicht angeordnet sein kann.

Die DE 10 2015 007 885 A1 offenbart ein Verbundbauteil, bei dem ein als Heizdraht ausgebildetes Heizelement von einer Folie gehalten wird, die Durchgangsöffnungen aufweist. Durch Aufheizen wird die Folie formschlüssig mit einer Bindeschicht verbunden, wobei die die Durchgangsöffnungen der Folie durchdringende Bindeschicht einerseits mit einer Deckschicht und andererseits mit einer Kernschicht stoff- und oder formschlüssig verbunden wird. Heizelement und Folie sind beispielsweise miteinander vernäht.

Offenbarung der Erfindung

Vor diesem Hintergrund werden mit dem hier vorgestellten Ansatz eine verbesserte Temperiervorrichtung gemäß Anspruch 1 ein verbessertes Verfahren zum Herstellen einer Temperiervorrichtung gemäss Anspruch 9 vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Es wird eine Temperiervorrichtung für ein Luftfahrzeug vorgestellt, die eine erste Schicht und eine der ersten Schicht gegenüberliegende zweite Schicht, eine Heizschicht, die zwischen der ersten Schicht und der zweiten Schicht angeordnet ist, sowie eine Trennschicht aufweist, die zwischen der Heizschicht und der zweiten Schicht angeordnet ist. Dabei ist die Trennschicht ausgeformt, um eine Relativbewegung zwischen der Heizschicht und der zweiten Schicht zu ermöglichen.

Die Temperiervorrichtung kann beispielsweise in einem Luftfahrzeug verbaut sein. Die erste Schicht und die zweite Schicht können parallel zueinander ausgerichtet sein. Die Heizschicht ist als ein Kaltleiter realisiert Die Trennschicht kann ausgeformt sein, um die Heizschicht und die zweite Schicht mechanisch voneinander zu entkoppeln. Vorteilhafterweise kann die Trennschicht einen Schutz der Heizschicht ermöglichen ohne das dabei ein elektrischer Widerstand der Heizschicht verändert wird. Wenn die zweite Schicht beispielsweise Harz aufweist, kann durch die Trennschicht ein Anhaften des Harzes an der Heizschicht während eines Aushärtevorgangs vermieden werden.

Gemäß einer Ausführungsform kann die Trennschicht ausgeformt sein, um die Relativbewegung als Scherbewegung zu ermöglichen. Vorteilhafterweise kann dadurch eine starre Verbindung zwischen der zweiten Schicht und der Heizschicht vermieden werden.

Weiterhin kann die Trennschicht als Trennfolie oder als Trennlack ausgeformt sein.

Eine Trennfolie ist einfach aufzubringen und kann auf bekannte Weise mit zumindest einer nichthaftenden Oberfläche realisiert werden, um die Relativbewegung zwischen der Heizschicht und der zweiten Schicht zu ermöglichen. Der Trennlack kann beispielsweise aus Paraffin bestehen. Dadurch kann vorteilhafterweise eine Struktur von Fasern der zweiten Schicht eingeebnet werden.

Gemäß einer Ausführungsform kann die Trennschicht, beispielsweise in Form der Trennfolie, aus einem Kunststoff ausgeformt sein. Der Kunststoff kann beispielsweise ein Perfluorethylenpropylen (FEP), FPA oder Polytetrafluorethylen (PTFE) sein. Somit können gängige Materialien für die Trennfolie eingesetzt werden.

Die Trennschicht weist gemäß Erfindung zumindest eine nichthaftende Oberfläche auf. Auf diese Weise kann beispielsweise die Heizschicht entlang der Trennschicht entlanggleiten. Zusätzlich oder alternativ kann die Trennschicht eine Viskosität kleiner als $1000\eta$ aufweisen. Auf diese Weise kann sich die Trennschicht verformen um eine Relativbewegung zwischen der Trennschicht und der Heizschicht zu ermöglichen.

Die Trennschicht kann eine Dicke von mehr als 0,01 mm, bevorzugt von mehr als 0,02mm aufweisen. Vorteilhafterweise kann die Trennschicht dadurch eine Struktur von Fasern der Temperiervorrichtung einebnen.

Ferner kann die erste Schicht als Trägerschicht und die zweite Schicht als Schutzschicht und/ oder Trägerschicht ausgeformt sein. Dem entsprechend kann auch umgekehrt die zweite Schicht als Trägerschicht und die erste Schicht als Schutzschicht ausgeformt sein. Eine Trägerschicht kann eine Platte, beispielsweise aus einem schwer entflammbaren Material, oder eine Folie sein. Somit kann die Temperiervorrichtung sowohl flexibel als auch starr ausgeformt sein.

Gemäß einer Ausführungsform kann zumindest eine der Schichten aus Harz oder aus vorimprägnierten Fasern ausgeformt sein. Die vorimprägnierten Fasern können beispielsweise auch als Prepreg bezeichnet werden. Prepreg steht beispielsweise für das Englische "pre-impregnated" und kann sich beispielsweise auf mit Reaktionsharzen vorimprägnierte textile Faser-Matrix-Halbzeuge beziehen. Somit können gängige Verbundwerkstoffe eingesetzt werden, wobei gegebenenfalls negative Wechselwirkungen zwischen der zweiten Schicht und der Heizschicht durch die Trennschicht vermieden werden können.

Die Heizschicht kann gemäß einer Ausführungsform aus einem Kaltleitermaterial ausgeformt sein. Vorteilhafterweise kann dadurch bei niedrigen Temperaturen eine bessere elektrische Leitfähigkeit als bei hohen Temperaturen sichergestellt werden. Dadurch ergibt sich bereits eine einfache Temperaturregelung.

Weiterhin weist die Heizschicht gemäß Erfindung eine Mehrzahl von Durchgangsöffnungen und die Trennschicht eine weitere Mehrzahl von Durchgangsöffnungen auf, um einen direkten Kontakt zwischen der ersten Schicht und der zweiten Schicht herstellen zu können. Die Mehrzahl von Durchgangsöffnungen und die weitere Mehrzahl von Durchgangsöffnungen können beispielsweise fluchtend übereinander angeordnet sein. Vorteilhafterweise bleibt dadurch eine Möglichkeit erhalten, eine mechanische Festigkeit zu erreichen oder ein Verrutschen der einzelnen Lagen zu vermeiden. Dennoch können außerhalb der Durchgangsöffnungen Relativbewegungen zwischen der Trennschicht und der Heizschicht erfolgen.

Die Temperiervorrichtung kann gemäß einer Ausführungsform in Form einer Bodenplatte oder eines Wandsegments für ein Luftfahrzeug ausgeformt sein. Das bedeutet, dass die Temperiervorrichtung beispielsweise in einem Flugzeug, aber auch beispielsweise in einem Fahrzeug oder beispielsweise in einer Bodenheizung in einem Gebäude realisiert sein kann. Vorteilhafterweise kann dadurch eine Fläche und somit ein Raum beheizt werden.

Weiterhin wird ein Verfahren zum Herstellen einer Temperiervorrichtung vorgestellt, das einen Schritt des stapelförmigen Anordnens einer ersten Schicht, einer zweiten Schicht, einer Heizschicht und einer Trennschicht umfasst. Dabei wird die Heizschicht zwischen der ersten Schicht und der zweiten Schicht und die Trennschicht zwischen der Heizschicht und der zweiten Schicht angeordnet. Weiterhin umfasst das Verfahren einen Schritt des Zusammenfügens der ersten Schicht, der Heizschicht, der Trennschicht und der zweiten Schicht. Dabei ist die Trennschicht ausgeformt, um nach dem Zusammenfügen eine Relativbewegung zwischen der Heizschicht und der zweiten Schicht zu ermöglichen.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

Ausführungsbeispiele des hier vorgestellten Ansatzes sind in den Zeichnungen dargestellt und in der nachfolgenden Beschreibung näher erläutert. Es zeigt:

Fig. 1 eine schematische Darstellung einer Temperiervorrichtung gemäß einem Ausführungsbeispiel für ein Luftfahrzeug;

Fig. 2 eine schematische Querschnittsdarstellung einer Temperiervorrichtung gemäß einem Ausführungsbeispiel;

Fig. 3 eine schematische Querschnittsdarstellung einer Temperiervorrichtung gemäß einem Ausführungsbeispiel; und

Fig. 4 ein Ablaufdiagramm eines Verfahrens zum Herstellen einer Temperiervorrichtung gemäß einem Ausführungsbeispiel.

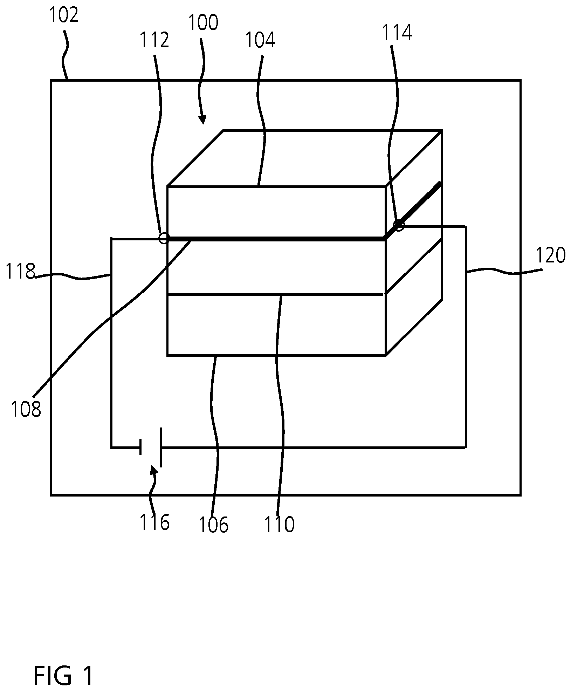

Fig. 1 zeigt eine schematische Darstellung einer Temperiervorrichtung 100 gemäß einem Ausführungsbeispiel. Lediglich beispielhaft wird die Temperiervorrichtung 100 in einem Innenraum eines Luftfahrzeugs 102 eingesetzt. Die Temperiervorrichtung 100 ist beispielsweise als ein Wandsegment oder eine Bodenplatte des Luftfahrzeugs 102 ausgeformt und kann zugleich als Heizung verwendet werden.

Die Temperiervorrichtung 100 weist eine erste Schicht 104 und eine der ersten Schicht 104 gegenüberliegende zweite Schicht 106 auf, die gemäß diesem Ausführungsbeispiel aus vorimprägnierten Fasern oder aus Harz ausgeformt sind. Die erste Schicht 104 ist dabei beispielsweise als eine Trägerschicht ausgeformt. Die zweite Schicht 106 ist beispielsweise als eine Schutzschicht ausgeformt. Alternativ ist die erste Schicht 104 als Schutzschicht und die zweite Schicht 106 als Trägerschicht realisiert. Weiterhin weist die Temperiervorrichtung 100 eine Heizschicht 108 auf, die auch als Heizelement oder PTC-Heizelement bezeichnet werden kann. Die Heizschicht 108 ist gemäß diesem Ausführungsbeispiel als ein Kaltleiter realisiert. Dadurch ist eine gute elektrische Leitfähigkeit bei niederen Temperaturen möglich. Die Heizschicht 108 ist dabei zwischen der ersten Schicht 104 und der zweiten Schicht 106 angeordnet. Ferner weist die Temperiervorrichtung 100 eine Trennschicht 110 auf, die zwischen der Heizschicht 108 und der zweiten Schicht 106 angeordnet ist. Gemäß diesem Ausführungsbeispiel sind die Schichten 104, 106, die Heizschicht 108 sowie die Trennschicht 110 parallel zueinander ausgerichtet, sodass die Temperiervorrichtung 100 gemäß diesem Ausführungsbeispiel als ein stapelförmiger Verbund ausgeformt ist. Die Trennschicht 110 ist dabei ausgeformt, um eine Relativbewegung, beispielsweise eine Scherbewegung, zwischen der Heizschicht 108 und der zweiten Schicht 106 zu ermöglichen. Die Trennschicht 110 ist beispielsweise als eine Trennfolie oder ein Trennlack ausgeformt. Gemäß diesem Ausführungsbeispiel weist die Trennschicht 110 eine Dicke auf, die beispielsweise zwischen 0,02mm und 0,04mm liegt. Gemäß einem Ausführungsbeispiel weist die Trennschicht 110 eine Dicke von mindestens 0,025mm auf.

Gemäß einem Ausführungsbeispiel wird die Temperiervorrichtung 100 als Composite-Bauteil ausgeführt, das beispielsweise bei Leichtbaukonstruktionen eingesetzt werden kann. Es wird eine Entkopplung der Schichten 104, 106, hier insbesondere der zweiten Schicht 106, von der Heizschicht 108 realisiert.

Gemäß diesem Ausführungsbeispiel hat die Trennschicht 110, die auch als Kunststofffolie bezeichnet wird, eine zwingend mechanisch trennende Wirkung. Sie haftet weder an der Heizschicht 108 noch haftet sie an einer der Schichten 104, 106, die aus Harz ausgeformt sein können, und dadurch wird eine (untrennbare) Verbindung "Harz zu Heizschicht 108" unterbunden.

Zusammengefasst entsteht durch den hier vorgestellten Ansatz keine mechanische Verbindung zwischen der zweiten Schicht 106 und der Heizschicht 108. Dadurch werden gemäß diesem Ausführungsbeispiel keine mechanischen Spannungen, die durch thermische Ausdehnung entstehen, auf die Heizschicht 108 übertragen. Zusätzlich kann ein chemischer Einfluss der zweiten Schicht 106 auf die Heizschicht 108 unterbunden werden. Weiterhin mildert die Trennschicht 110 ein starkes Drücken einer Glas- oder Aramidfaserstruktur auf die Heizschicht 108 ab, wenn beispielsweise die zweite Schicht 106 eine solche Struktur aufweiset. Dadurch ergibt sich folglich eine höhere Prozesssicherheit bei beispielsweise einer Herstellung sowie eine größere Resistenz gegen sehr hohe Umgebungstemperaturen.

Die mit dem vorgestellten Ansatz erreichbaren Vorteile bestehen darin, dass durch die Trennschicht 110 vermieden wird, dass sich veränderte Eigenschaften des PTC-Materials ergeben, wie beispielsweise ein erhöhter elektrischer Widerstand. Haftmöglichkeiten an dem PTC-Material der Heizschicht 108 können ebenfalls vermieden werden. Durch den hier vorgestellten Ansatz wird also eine Möglichkeit vorgestellt, um eine trennende Verbindung zu der Heizschicht 108 herzustellen. Durch den hier vorgestellten Ansatz wird weiterhin vorteilhafterweise ein Drücken einer Gewebestruktur in das gegebenenfalls weiche PTC-Material der Heizschicht 108 und ein dadurch verursachtes Ändern des elektrischen Widerstandes während eines Aushärtungsprozesses verhindert, sodass ein konstanter elektrischer Widerstand ermöglicht wird und eine Längenänderung des PTC-Heizelements der Heizschicht 108 vermieden wird. Dadurch kann auch eine durch hohe Umgebungstemperaturen verursachte dauerhafte Erhöhung des elektrischen Widerstands, beispielsweise über 85°C oberhalb eines PTC-Abregelpunktes (etwa 65°C), verhindert werden. Vorteilhafterweise kann eine konstante Heizleistung erzielt werden. Weiterhin können durch thermische Ausdehnung entstehende mechanische Spannungen vermieden werden und es wird eine Resistenz gegen sehr hohe Umgebungstemperaturen erhöht.

Gemäß diesem Ausführungsbeispiel ist die Heizschicht 108 über eine erste Schnittstelle 112 und eine zweite Schnittstelle 114 mit einer Spannungsquelle 116 verbunden, beispielsweise über eine erste Leitung 118 und eine zweite Leitung 120. Dadurch kann ein Strom durch die Heizschicht 108 geleitet werden, um elektrische Energie in thermische Energie zu wandeln. Die Spannungsquelle ist gemäß einem Ausführungsbeispiel ausgebildet, um eine konstante Spannung U bereitzustellen. Für die Heizleistung P gilt:

$$P = U * I$$

Aus dem Zusammenhang U=R*I ergibt sich:

$$P = U^2/R$$

Dabei stellt I den Stromfluss durch die Heizschicht 108 und R den elektrischen Widerstand der Heizschicht 108 dar.

Gemäß einem alternativen Ausführungsbeispiel ist die Trennschicht 110 zwischen der ersten Schicht 104 und der Heizschicht 108 angeordnet oder es ist eine weitere Trennschicht 110 oder eine andersartige Schutzschicht zwischen der ersten Schicht 104 und der Heizschicht 108 angeordnet. Wenn die Temperiervorrichtung 100 eine Compositestruktur aufweist wird durch die Trennschicht 110 oder gegebenenfalls durch zwei Trennschichten 100 eine Entkopplung des Harzes der Prepreglagen, hier der Schichten 104, 106, der Compositestruktur vom PTC-Material des Heizelementes der Heizschicht 108 realisiert.

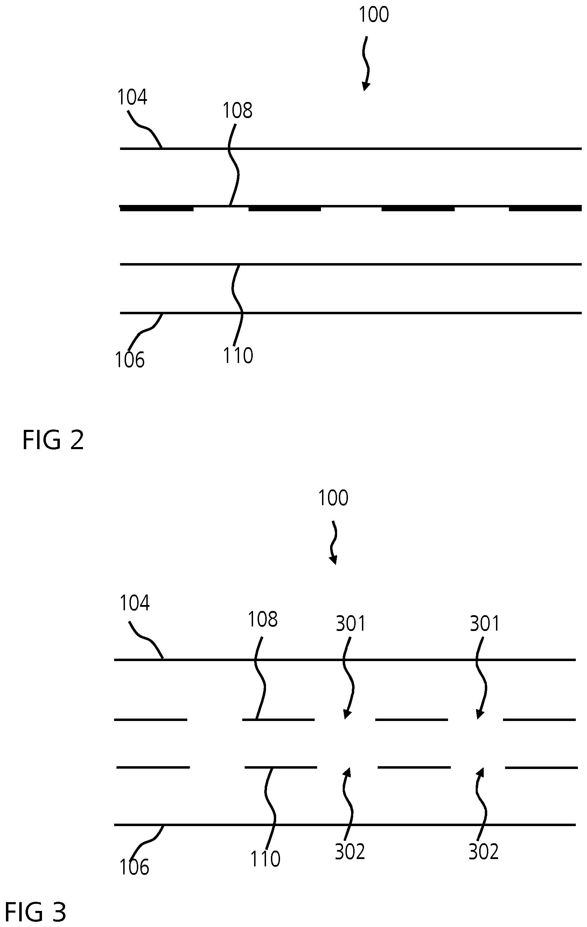

Fig. 2 zeigt eine schematische Querschnittsdarstellung einer Temperiervorrichtung 100 gemäß einem Ausführungsbeispiel. Die hier dargestellte Temperiervorrichtung 100 kann der Temperiervorrichtung 100 entsprechen, wie sie in einer der Figuren 1 oder 2 beschrieben wurde.

Gezeigt ist ein schematischer schematischer Lagenaufbau der Heizschicht 108 in Form eines PTC-Heizelements zwischen den zwei Schichten 104, 106 gezeigt. Die zwei Schichten 104, 106 können Prepreglagen darstellen oder Harz sein, in die das PTC-Heizelement eingebettet ist. Die Trennschicht 110 ist als Trennfolie oder Trennlack realisiert.

Als Trennschicht 110 kommen gemäß einem Ausführungsbeispiel Composite Trennfolien ohne Klebebeschichtung in Frage, wie beispielsweise FEP, FPA oder PTFE. Alternativ ist die Trennschicht 110 als Trennlack realisiert, der auch als Anti-Haft-Lack bezeichnet werden kann. Der Trennlack ist beispielsweise ein Paraffinfilm, der gemäß diesem Ausführungsbeispiel dauerhaft die zweite Schicht 106 von der Heizschicht 108 trennt. Gemäß einem alternativen Ausführungsbeispiel wird der Trennlack per Siebdruck-Verfahren aufgebracht.

Fig. 3 zeigt eine schematische Querschnittsdarstellung einer Temperiervorrichtung 100 gemäß einem Ausführungsbeispiel. Die hier gezeigte Temperiervorrichtung 100 kann der in Fig. 2 beschriebenen Temperiervorrichtung 100 entsprechen. Lediglich die Heizschicht 108 und die Trennschicht 110 unterscheiden sich insofern, dass sie gemäß diesem Ausführungsbeispiel nicht durchgehend sind, sondern eine weitere Mehrzahl von Durchgangsöffnungen 301, 302 aufweisen. Gemäß diesem Ausführungsbeispiel dient dies dazu, einen direkten Kontakt zwischen der ersten Schicht 104 und der zweiten Schicht 106 herzustellen. Gemäß diesem Ausführungsbeispiel liegt die weitere Mehrzahl von Durchgangsöffnungen 302 der Trennschicht 110 gegenüber der Mehrzahl von Durchgangsöffnungen 301 der Heizschicht 108. Alternativ weisen die Heizschicht 108 und die Trennschicht 110 auch jeweils nur eine Durchgangsöffnung 301, 302 auf. Wenn zumindest eine der Schichten 104, 106 Harz umfasst, so kann durch die zumindest eine Durchgangsöffnung 301, 302 beim Aushärten des Harzes eine starre Verbindung zwischen den Schichten 104, 106 geschaffen werden.

Gemäß einem Ausführungsbeispiel ist die Trennschicht 110 gelocht, wenn auch die Heizschicht 108 gelocht ist, um eine mechanische Festigkeit im Bauteil zu erreichen. Dadurch kann ein Problem bei einer ungelochten Heizschicht 108 umgangen werden, die die Temperiervorrichtung 100 in zwei Hälften trennen und so die Festigkeit reduzieren könnte.

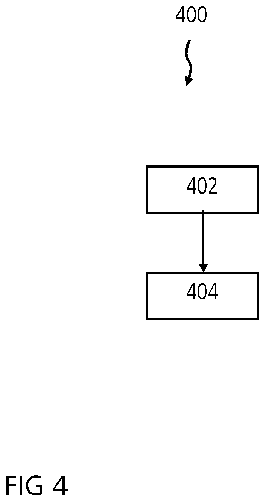

Fig. 4 zeigt ein Ablaufdiagramm eines Verfahrens 400 zum Herstellen einer Temperiervorrichtung gemäß einem Ausführungsbeispiel. Das bedeutet, dass durch das Verfahren 400 eine Temperiervorrichtung hergestellt werden kann, wie sie in den Figuren 1 bis 3 beschrieben wurde.

Das Verfahren 400 umfasst dabei einen Schritt 402 des stapelförmigen Anordnens und einen Schritt 404 des Zusammenfügens. Im Schritt 402 des stapelförmigen Anordnens wird die erste Schicht, die zweite Schicht, die Heizschicht und die Trennschicht stapelförmig angeordnet. Dabei wird die Heizschicht zwischen der ersten Schicht und der zweiten Schicht und die Trennschicht zwischen der Heizschicht und der zweiten Schicht angeordnet. Im Schritt 404 des Zusammenfügens wird die erste Schicht, die Heizschicht, die Trennschicht und die zweite Schicht zusammengefügt. Die Trennschicht wird dabei so gewählt, dass sie nach dem Zusammenfügen eine Relativbewegung zwischen der Heizschicht und der zweiten Schicht ermöglicht.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Temperiervorrichtung (100) für ein Luftfahrzeug (102), wobei die Temperiervorrichtung (100) die folgenden Merkmale aufweist:

   eine erste Schicht (104) und eine der ersten Schicht (104) gegenüberliegende zweite Schicht (106);
   eine Heizschicht (108), die aus einem Kaltleitermaterial ausgeformt ist und zwischen der ersten Schicht (104) und der zweiten Schicht (106) angeordnet ist; und
   eine Trennschicht (110), die zwischen der Heizschicht (108) und der zweiten Schicht (106) angeordnet ist, wobei die Trennschicht (110) ausgeformt ist, um eine Relativbewegung zwischen der Heizschicht (108) und der zweiten Schicht (106) zu ermöglichen
   **dadurch gekennzeichnet, dass**
   die Trennschicht (110) zumindest eine nichthaftende Oberfläche aufweist, um ein Entlanggleiten der Heizschicht (108) entlang der Trennschicht (110) zu ermöglichen, und
   die Heizschicht (108) eine Mehrzahl von Durchgangsöffnungen (301) aufweist, und die Trennschicht (110) eine weitere Mehrzahl von Durchgangsöffnungen (302) aufweist, um einen direkten Kontakt zwischen der ersten Schicht (104) und der zweiten Schicht (106) herzustellen, wobei außerhalb der Durchgangsöffnungen (301, 302) Relativbewegungen zwischen der Trennschicht (110) und der Heizschicht (108) erfolgen können.

2. Temperiervorrichtung (100) gemäß Anspruch 1, wobei die Trennschicht (110) ausgeformt ist, um die Relativbewegung als eine Scherbewegung zu ermöglichen.

3. Temperiervorrichtung (100) gemäß einem der vorangegangenen Ansprüche, wobei die Trennschicht (110) als Trennfolie oder als Trennlack ausgeformt ist.

**4.** Temperiervorrichtung (100) gemäß einem der vorangegangenen Ansprüche, wobei die Trennschicht (110) eine Dicke von mehr als 0,01 mm, bevorzugt von mehr als 0,02 mm aufweist.

**5.** Temperiervorrichtung (100) gemäß einem der vorangegangenen Ansprüche, wobei die erste Schicht (104) als Trägerschicht und die zweite Schicht (106) als Schutzschicht und/oder Trägerschicht ausgeformt ist.

**6.** Temperiervorrichtung (100) gemäß einem der vorangegangenen Ansprüche, wobei zumindest eine der Schichten (104, 106) aus Harz oder aus vorimprägnierten Fasern ausgeformt ist.

**7.** Temperiervorrichtung (100) gemäß einem der vorangegangenen Ansprüche, wobei die Heizschicht (108) aus einem Kaltleitermaterial ausgeformt ist.

**8.** Temperiervorrichtung (100) gemäß einem der vorangegangenen Ansprüche, wobei die Temperiervorrichtung (100) in Form einer Bodenplatte oder eines Wandsegments für ein Luftfahrzeug (102) ausgeformt ist.

**9.** Verfahren (400) zum Herstellen einer Temperiervorrichtung (100) gemäß einem der vorangegangenen Ansprüche, wobei das Verfahren (400) die folgenden Schritte umfasst:

Stapelförmiges Anordnen (402) einer ersten Schicht (104), einer zweiten Schicht (106), einer Heizschicht (108) und einer Trennschicht (110), wobei die Heizschicht (108) aus einem Kaltleitermaterial ausgeformt ist und zwischen der ersten Schicht (104) und der zweiten Schicht (106) und die Trennschicht (110) zwischen der Heizschicht (108) und der zweiten Schicht (106) angeordnet wird; und
Zusammenfügen (404) der ersten Schicht (104), der Heizschicht (108), der Trennschicht (110) und der zweiten Schicht (106), wobei die Trennschicht (110) ausgeformt ist, um nach dem Zusammenfügen eine Relativbewegung zwischen der Heizschicht (108) und der zweiten Schicht (106) zu ermöglichen, **dadurch gekennzeichnet, dass** die Trennschicht (110) zumindest eine nichthaftende Oberfläche aufweist, um nach dem Zusammenfügen ein Entlanggleiten der Heizschicht (108) entlang der Trennschicht (110) zu ermöglichen, und die Heizschicht (108) eine Mehrzahl von Durchgangsöffnungen (301) aufweist, und die Trennschicht (110) eine weitere Mehrzahl von Durchgangsöffnungen (302) aufweist, um einen direkten Kontakt zwischen der ersten Schicht (104)

und der zweiten Schicht (106) herzustellen, wobei nach dem Zusammenfügen außerhalb der Durchgangsöffnungen (301, 302) Relativbewegungen zwischen der Trennschicht (110) und der Heizschicht (108) erfolgen können.

**Claims**

**1.** Temperature control device (100) for an aircraft (102), wherein the temperature control device (100) comprises:

a first layer (104) and a second layer (106) opposite the first layer (104);
a heating layer (108) formed from a cold conductor material and arranged between the first layer (104) and the second layer (106); and
a separating layer (110) arranged between the heating layer (108) and the second layer (106), wherein the separating layer (110) is formed to allow relative movement between the heating layer (108) and the second layer (106), **characterised in that** the separating layer (110) has at least one non-adhesive surface to allow the heating layer (108) to slide along the separating layer (110), and the heating layer (108) has a plurality of through openings (301), and the separating layer (110) has a further plurality of through openings (302) to establish direct contact between the first layer (104) and the second layer (106), wherein relative movements between the separating layer (110) and the heating layer (108) can take place outside the through openings (301, 302).

**2.** Temperature control device (100) according to claim 1, wherein the separating layer (110) is shaped to allow the relative movement as a shearing movement.

**3.** Temperature control device (100) according to one of the preceding claims, wherein the separating layer (110) is formed as a separating film or as a separating lacquer.

**4.** Temperature control device (100) according to one of the preceding claims, wherein the separating layer (110) has a thickness of more than 0.01 mm, preferably more than 0.02 mm.

**5.** Temperature control device (100) according to one of the preceding claims, wherein the first layer (104) is formed as a carrier layer and the second layer (106) is formed as a protective layer and/or carrier layer.

**6.** Temperature control device (100) according to one of the preceding claims, wherein at least one of the layers (104, 106) is formed from resin or from pre-impregnated fibres.

7. Temperature control device (100) according to one of the preceding claims, wherein the heating layer (108) is formed from a cold conductor material.

8. Temperature control device (100) according to one of the preceding claims, wherein the temperature control device (100) is formed in the shape of a floor panel or a wall segment for an aircraft (102).

9. Method (400) for manufacturing a temperature control device (100) according to one of the preceding claims, wherein the method (400) comprises the steps of:

stacking (402) a first layer (104), a second layer (106), a heating layer (108) and a separating layer (110), wherein the heating layer (108) is formed from a PTC material and is arranged between the first layer (104) and the second layer (106), and the separating layer (110) is arranged between the heating layer (108) and the second layer (106); and
joining (404) the first layer (104), the heating layer (108), the separating layer (110) and the second layer (106), wherein the separating layer (110) is formed to allow relative movement between the heating layer (108) and the second layer (106) after joining (106) after assembly,
**characterised in that**
the separating layer (110) has at least one non-adhesive surface to allow the heating layer (108) to slide along the separating layer (110) after assembly, and
the heating layer (108) has a plurality of through openings (301), and the separating layer (110) has a further plurality of through openings (302) to establish direct contact between the first layer (104) and the second layer (106), wherein, after joining, relative movements between the separating layer (110) and the heating layer (108) can take place outside the through openings (301, 302).

**Revendications**

1. Dispositif de régulation de température (100) pour un aéronef (102), le dispositif de régulation de température (100) comprenant les caractéristiques suivantes:

une première couche (104) et une deuxième couche (106) opposée à la première couche (104);
une couche chauffante (108) formée d'un matériau thermosensible et disposée entre la première couche (104) et la deuxième couche (106); et
une couche de séparation (110) disposée entre la couche chauffante (108) et la deuxième couche (106), la couche de séparation (110) étant formée de manière à permettre un mouvement relatif entre la couche chauffante (108) et la deuxième couche (106),
**caractérisé en ce que**
la couche de séparation (110) présente au moins une surface non adhésive pour permettre à la couche chauffante (108) de glisser le long de la couche de séparation (110), et
la couche chauffante (108) présente une pluralité d'ouvertures de passage (301) et la couche de séparation (110) présente une autre pluralité d'ouvertures de passage (302) pour établir un contact direct entre la première couche (104) et la deuxième couche (106), des mouvements relatifs entre la couche de séparation (110) et la couche chauffante (108) pouvant avoir lieu à l'extérieur des ouvertures de passage (301, 302).

2. Dispositif de régulation de température (100) selon la revendication 1, dans lequel la couche de séparation (110) est formée de manière à permettre le mouvement relatif sous forme d'un mouvement de cisaillement.

3. Dispositif de régulation de température (100) selon l'une des revendications précédentes, la couche de séparation (110) étant formée comme une feuille de séparation ou comme une laque de séparation.

4. Dispositif de régulation de température (100) selon l'une des revendications précédentes, la couche de séparation (110) ayant une épaisseur supérieure à 0,01 mm, de préférence supérieure à 0,02 mm.

5. Dispositif de régulation de température (100) selon l'une des revendications précédentes, la première couche (104) étant formée comme couche de support et la deuxième couche (106) comme couche de protection et/ou couche de support.

6. Dispositif de régulation de température (100) selon l'une des revendications précédentes, dans lequel au moins l'une des couches (104, 106) est formée de résine ou de fibres préimprégnées.

7. Dispositif de régulation de température (100) selon l'une des revendications précédentes, la couche chauffante (108) étant formée d'un matériau à coefficient de dilatation thermique négatif.

8. Dispositif de régulation de température (100) selon l'une des revendications précédentes, le dispositif de régulation de température (100) étant formé sous la forme d'une plaque de fond ou d'un segment de paroi pour un aéronef (102).

9. Procédé (400) de fabrication d'un dispositif de régulation de température (100) selon l'une des revendications précédentes, le procédé (400) comprenant les étapes suivantes:

disposition en empilement (402) d'une première couche (104), d'une deuxième couche (106), d'une couche chauffante (108) et d'une couche de séparation (110), la couche chauffante (108) étant formée d'un matériau thermostatique et étant disposée entre la première couche (104) et la deuxième couche (106) et la couche de séparation (110) étant disposée entre la couche chauffante (108) et la deuxième couche (106); et assemblage (404) de la première couche (104), de la couche chauffante (108), de la couche de séparation (110) et de la deuxième couche (106), la couche de séparation (110) étant formée de manière à permettre, après l'assemblage, un mouvement relatif entre la couche chauffante (108) et la deuxième couche (106) après l'assemblage,
**caractérisé en ce que**
la couche de séparation (110) présente au moins une surface non adhésive pour permettre, après l'assemblage, un glissement de la couche chauffante (108) le long de la couche de séparation (110), et
la couche chauffante (108) comporte une pluralité d'ouvertures de passage (301) et la couche de séparation (110) présente une autre pluralité d'ouvertures de passage (302) pour établir un contact direct entre la première couche (104) et la deuxième couche (106), des mouvements relatifs entre la couche de séparation (110) et la couche chauffante (108) pouvant avoir lieu après l'assemblage à l'extérieur des ouvertures de passage (301, 302).

EP 3 987 886 B1

FIG 1

9

100

104    108

FIG 2

100

104

108    301    301

106    110    302    302

FIG 3

400

402

404

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016107908 A1
- EP 2291054 A1
- EP 2685784 A1
- DE 102015007885 A1